# EUROPEAN PATENT SPECIFICATION

(11) **EP 1 826 358 B1**
(45) Date of publication and mention of the grant of the patent: **16.09.2015**
(21) Application number: 07250775.9
(22) Date of filing: 23.02.2007
(51) Int. Cl.: E06B 11/02, A01K 1/00

(54) **Gates for electric fences**
Tor für elektrische Zäune
Barrières pour clôtures électriques

(30) Priority: 23.02.2006 GB 0603710
(43) Date of publication of application: 29.08.2007
(73) Proprietor: Austin, Jeremy Phillip, Henstridge Somerset BA8 0TS (GB)
(72) Inventor: Austin, Jeremy Phillip, Henstridge Somerset BA8 0TS (GB)
(74) Representative: Moore, Derek

(56) References cited:
- WO-A-79/00232
- FR-A- 1 117 545
- FR-A1- 2 727 827
- GB-A- 925 683
- US-A- 5 138 796
- US-A- 5 615 520

## Description

This invention concerns gates for electric fences.

Electric fences are widely used for containing livestock in fields, self-closing electrified gates being provided in the fences to allow vehicles to pass through the fences without having to stop whilst maintaining an electrified perimeter to the fields, after which the gates close automatically.

GB925683 describes such a gate including a horizontal electrified rail which extends across the gate opening, the rail being hinged at one end and biased towards its closed position under gravitational pull or using a spring. Vehicles passing through the gate in either direction push the rail to open the gate, the gate being closed by gravity or the spring.

FR2727827 also describes such a gate, opening and closing of the gate being provided by a spring-loaded double acting hinge that supports a barrier arm. A vehicle passing through the gate in one direction opens one half of the hinge, and when passing through the gate in the opposite direction opens the other half of the hinge.

US Patent No.5138796 discloses a gate for closing an enclosure which can be pushed to the open position by a vehicle, but the gate is very large and heavy and will inevitably cause some damage to a vehicle pushing it open. It is therefore suitable only for use with large agricultural vehicles where slight damage is not relevant. Furthermore, it does not provide a continually closed opening when it is pushed open and is thus not suitable for use with electrified animal enclosures. The present invention seeks to overcome these problems.

According to the present invention there is provided a self-closing gate adapted for use with an electrified enclosure, the gate comprising a flexible, electrically conductive barrier adapted to close a gateway in the enclosure, and a hinge to which the barrier is connected which allows the gate to open and close when a vehicle pushes past the barrier, wherein the barrier is openable to either side of a closed position, the hinge comprising a first tube connected to the barrier and a second tube telescopically engaged with the first tube and for securing the hinge to a rigid object, the first and second tubes being formed of electrically non-conducting material and further including cam surfaces whereby rotation of the tubes relative to each other when the barrier is opened and closed causes the first tube to rise and fall axially of the second tube, a tension spring within the tubes serves to urge said cam surfaces into engagement in such a way as to bias the gate into the closed position, characterised in that: the tension spring is formed of an electrically conductive material to provide an electrical connection between the barrier and a metal bolt connected to the tubes, the metal bolt serving to hold an electrical connection to the gate, wherein the barrier is coated with an electro-conductive paint to provide an outer conductive layer for forming an electrical connection to said spring.

An embodiment of self-closing gate in accordance with the present invention will now be described with reference to the accompanying drawings in which:-
Fig. 1 is a perspective view of the embodiment with the gate closed;
Fig. 2 is a perspective view of the embodiment with the gate held open in one direction; and
Fig. 3 is an exploded and part cut away view of the embodiment with the gate open in a different direction from that shown in Fig. 2.

The illustrated gate consists of a hinge 1 to which is secured a gate arm 2. The hinge 1 consists of two telescopically engaging tubes 3 and 4, the inner tube 4 being a close slideable fit within the outer tube 3.

The outer tube 3 has two fin-like extensions 5 with through holes 6 which can be used to secure the hinge 1 to a fixed structure, for example a gate post (not shown). In use, the tube 3 will in general be secured with its axis substantially vertical.

An upper end portion 7 of the tube 3 defines a substantially flat surface 8 which angled at approximately 45° to the axis of the tube 3, the lowest point 9 of this surface 8 being substantially symmetrical positioned relative to the extensions 5.

The inner tube 4 has an integral external circumferential ring 10 which is at an angle of approximately 45° to its axis so that when the tubes 3 and 4 are slid into engagement with each other the ring 10 of the tube 4 contacts the surface 8 of the tube 3.

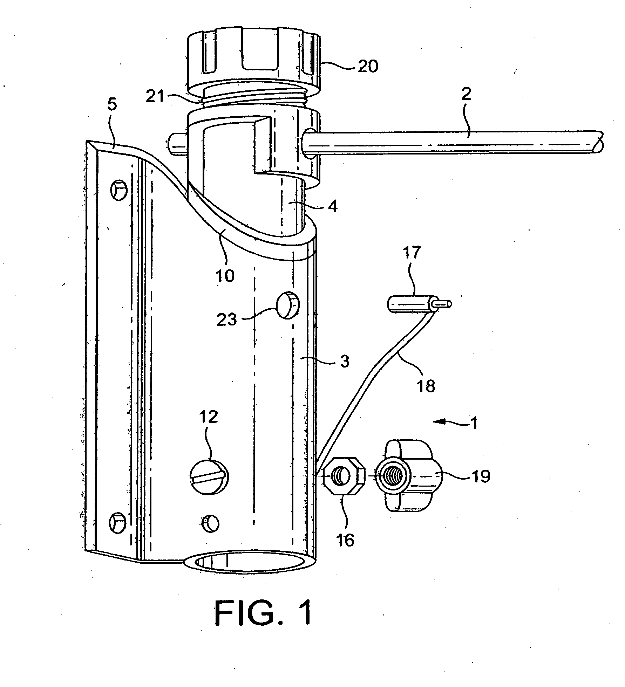

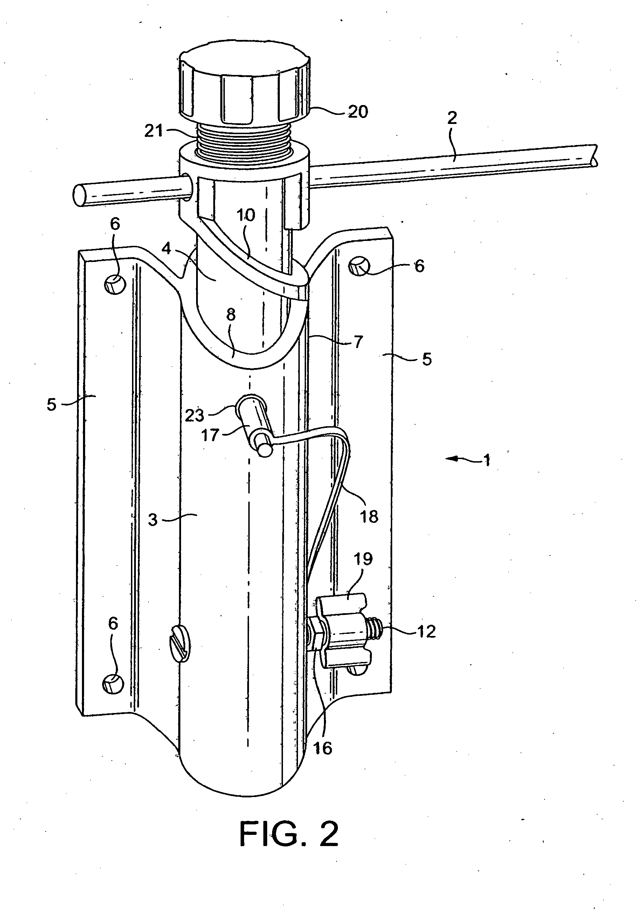

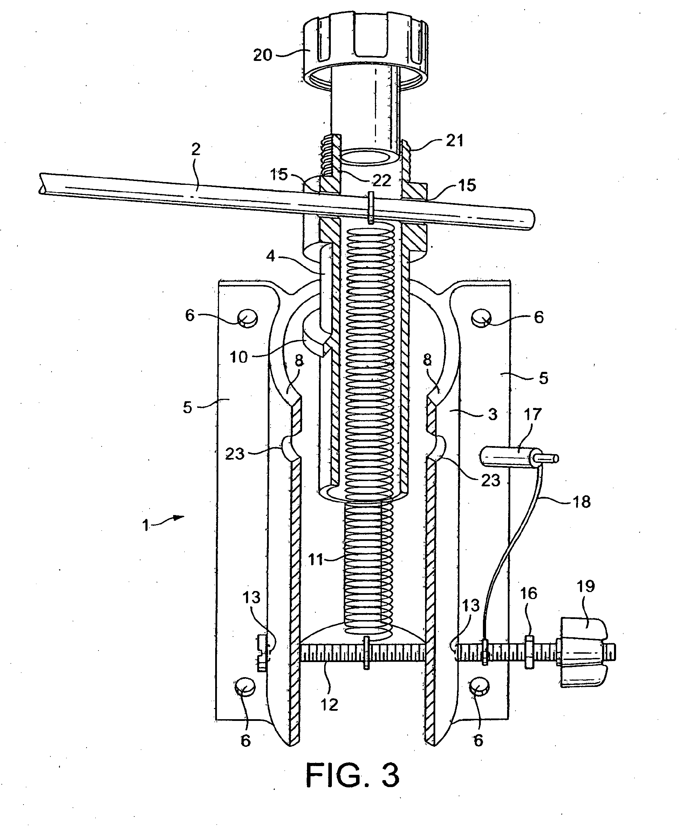

As shown in Fig. 1, with the gate closed, the ring 10 rests fully on the surface 8. However, when pressure is applied to the gate arm 2, tube 4 is rotated relative to tube 3 and the ring 10 slides on the surface 8, thereby raising the tube 4. This results whether the gate arm 2 is rotated to the right as shown in Fig. 2 or to the left as shown in Fig. 3.

The ring 10 is urged into engagement with the ring 10 by an electrically conductive tension spring 11 which is stretched between a metal bolt 12 which extends through diametrically opposing holes 13 in the tube 3 and end portion 14 of the gate arm 2 which is located in diametrically opposing holed 15 in the tube 4.

The bolt 12 is held in place by a nut 16 which also holds captive a plug 17 on a cord 18 on the bolt 12. A wing nut 19 threaded on the bolt 12 serves to hold an electrical energising connection to the gate.

A screw threaded cap 20 threaded on to an external thread 21 on an upper portion 22 of the inner tube 4 serves both to hold the gate arm 2 in position relative to the tube 4 and to exclude water from the interior of the tube 4.

Tension in the spring 11 serves to urge the tube 4 downwardly within the outer tube 3, and when the gate arm 2 is in an open position this urges the arm 2 into its closed position with the ring 10 fully engaged with the surface 8.

The gate can be fixed in one or other of its open positions using the plug 17 by passing it through a hole 23 in the outer tube 3 and into one of two holes (not shown) in the inner tube 4 when the latter is aligned with the hole 23.

The hinge 1 is preferably made from plastics materials and especially from plastics materials which resist degradation when exposed to weathering such as would be encountered by them in use. A particularly preferred material for making the hinge 1 are glass reinforced plastics materials.

The arm 2 can be substantially similar to gate arms of hitherto proposed gates for electrified fences. However, it is preferred to make them from glass fibre which is subsequently coated with an electro-conductive paint and then coated with a conductive layer of an EPDM rubber. Electrical connection to the arms 2 is achieved from the bolt 12 and through the spring 11 which is in physical and electrical contact therewith.

Insulated regions along the length of the arms can be provided along the length of the arms, and these can be indicated by giving them a distinctive colour, for example yellow on black.

The tips of the arms 2 are preferably constructed from a material which will not scratch vehicle paint.

## Claims

1. A self-closing gate adapted for use with an electrified enclosure, the gate comprising a flexible, electrically conductive barrier (2) adapted to close a gateway in the enclosure, and a hinge (1) to which the barrier (2) is connected which allows the gate to open and close when a vehicle pushes past the barrier (2), wherein the barrier (2) is openable to either side of a closed position, the hinge (1) comprising a first tube (4) connected to the barrier (2) and a second tube (3) telescopically engaged with the first tube (4) and for securing the hinge (1) to a rigid object, the first and second tubes (3, 4) being formed of electrically non-conducting material and further including cam surfaces 8 whereby rotation of the tubes (3, 4) relative to each other when the barrier (2) is opened and closed causes the first tube (4) to rise and fall axially of the second tube (3), a tension spring (11) within the tubes (3, 4) serves to urge said cam surfaces (8) into engagement in such a way as to bias the gate into the closed position, **characterised in that**
the tension spring (11) is formed of an electrically conductive material to provide an electrical connection between the barrier and a metal bolt (12) connected to the tubes (3, 4),
the metal bolt (12) serving to hold an electrical connection to the gate, wherein the barrier (2) is coated with an electro-conductive paint to provide an outer conductive layer for forming an electrical connection to said spring (11).

2. A self-closing gate according to claim 1, wherein the telescopically engaging tubes (3, 4) are formed from a glass reinforced plastics material.

3. A self-closing gate according to claim 1 or 2, wherein the barrier (2) comprises glass fibre coated with an electro-conductive paint.

4. A self-closing gate according to claim 3, wherein the barrier (2) has an outer conductive layer of an EPDM rubber.

## Patentansprüche

1. Selbst-schließendes Tor für Einsatz mit einem elektrifizierten Gehege, umfassend eine biegsame, elektrisch leitfähige Schranke (2), die zum Verschließen eines Eingangs in das Gehege ausgelegt ist, und ein mit der Schranke (2) verbundenes Scharnier (1), das bei Vorbeifahrt eines Fahrzeugs an der Schranke (2) das Öffnen und Schließen des Tors ermöglicht, wobei die Schranke (2) beidseitig einer Schließstellung geöffnet werden kann, wobei das Scarnier (1) ein erstes mit der Schranke (2) verbundenes Rohr (4) und ein in teleskopischem Eingriff mit dem ersten Rohr (4) stehendes, zur Befestigung des Scharniers (1) an einem starren Gegenstand bestimmtes zweites Rohr (3) umfasst, und wobei das erste und das zweite Rohr (3, 4) aus einem elektrisch nicht-leitenden Material bestehen, und weiter umfassend Nockenflächen (8), wodurch die Drehung der Rohre (3, 4) relativ zueinander beim Öffnen und Schließen der Schranke (2) das axiale Anheben und Absenken des ersten Rohrs (4) im Verhältnis zum zweiten Rohr (3) veranlasst und eine Spannfeder (11) in den Rohren (3, 4) die besagten Nockenflächen (8) so in Eingriff drängt, dass das Tor in Schließstellung vorgespannt wird,
**dadurch gekennzeichnet, dass**
die Spannfeder (11) aus einem elektrisch leitfähigen Material besteht, um eine elektrische Verbindung zwischen der Schranke und einem mit den Rohren (3, 4) verbundenen Metallbolzen (12) herzustellen, der eine elektrische Verbindung mit dem Tor aufrecht erhält, wobei die Schranke (2) mit einem elektrisch leitfähigen Anstrich versehen ist, um eine leitfähige Außenschicht zur Bildung einer elektrischen Verbindung mit der besagten Feder (11) bereit zu stellen.

2. Selbst-schließendes Tor nach Anspruch 1, wobei die teleskopisch ineinander eingreifenden Rohre (3, 4) aus einem glasfaserverstärkten Kunststoffmaterial hergestellt werden.

3. Selbst-schließendes Tor nach Anspruch 1 oder 2, wobei die Schranke (2) eine Glasfaserbeschichtung mit einem elektrisch leitfähigen Anstrich aufweist.

4. Selbst-schließendes Tor nach Anspruch 3, wobei die Schranke (2) eine leitfähige Außenschicht aus EPDM-Gummi aufweist.

## Revendications

1. Portail à fermeture automatique conçu pour être utilisé conjointement avec une enveloppe de protection électrifiée, le portail comprenant une barrière (2) électroconductrice conçue pour fermer une entrée dans l'enveloppe de protection, et une charnière (1) à laquelle est reliée la barrière (2) qui permet au portail de s'ouvrir et de se fermer lorsqu'un véhicule franchit la barrière, la barrière (2) pouvant s'ouvrir de chaque côté d'une position fermée, la charnière (1) comprenant un premier tube (1) relié à la barrière (2) et un second tube (3) s'insérant de manière télescopique dans le premier tube (4) et destiné à fixer la charnière (1) à un objet rigide, le premier et le second tube (3, 4) étant constitués d'un matériau non électroconducteur et comprenant en outre des surfaces (8) de came, permettant ainsi à la rotation des tubes (3, 4) l'un par rapport à l'autre, lorsque la barrière (2) est ouverte et fermée, d'amener le premier tube (4) à se soulever et le second tube (3) à s'abaisser axialement, un ressort (11) de tension à l'intérieur des tubes (3, 4) sert à solliciter lesdites surfaces (8) de came de manière à venir en contact d'une telle manière à amener le portail dans la position fermée, **caractérisé en ce que** le ressort (11) de tension est constitué d'un matériau électroconducteur pour fournir une connexion électrique entre la barrière et un boulon (12) métallique relié aux tubes (3, 4), le boulon (12) métallique servant à maintenir une connexion électrique avec le portail, la barrière (2) étant revêtue d'une peinture électroconductrice pour fournir une couche externe conductrice destinée à former une connexion électrique avec ledit ressort (11).

2. Portail à fermeture automatique selon la revendication 1, les tubes (3, 4) s'insérant l'un dans l'autre de manière télescopique étant constitués d'un matériau synthétique renforcé à la fibre de verre.

3. Portail à fermeture automatique selon la revendication 1 ou la revendication 2, la barrière (2) comprenant de la fibre de verre revêtue d'une peinture électroconductrice.

4. Portail à fermeture automatique selon la revendication 3, la barrière (2) comprenant une couche externe conductrice constituée de caoutchouc éthylène-propylène-diène.
